# EUROPEAN PATENT APPLICATION

(11) **EP 3 246 724 A1**
(43) Date of publication of application: **22.11.2017**
(21) Application number: 16170487.9
(22) Date of filing: 19.05.2016
(51) Int. Cl.: G01S 5/02, H04N 5/00

(54) **A METHOD, APPARATUS, SYSTEM AND COMPUTER PROGRAM FOR CONTROLLING A POSITIONING MODULE AND/OR AN AUDIO CAPTURE MODULE**

(71) Applicant: Nokia Technologies Oy, 02610 Espoo (FI)
(72) Inventor: Cricri, Francesco, 33200 Tampere (FI); Leppänen, Jussi Artturi, 33580 Tampere (FI); Eronen, Antti Johannes, 33820 Tampere (FI); Lehtiniemi, Arto Juhani, 33880 Lempäälä (FI)
(74) Representative: Swindell & Pearson Limited

(57) **Abstract**

Certain examples of the present invention relate to a method, apparatus, system and computer program for controlling a positioning module and/or an audio capture module. Certain examples provide a method (100) comprising: associating (101) one or more positioning modules (501) with one or more audio capture modules (502); and controlling (102) one or more operations of the one or more positioning modules (501) and/or the associated one or more audio capture modules (502) in dependence upon: one or more pre-determined times (202(a)), and one or more pre-determined positions (202(b)).

## Description

### TECHNOLOGICAL FIELD

Examples of the present disclosure relate to a method, apparatus, system and computer program for controlling a positioning module and/or an audio capture module. Certain particular examples, though without prejudice to the foregoing, relate to a method, apparatus, system and computer program for controlling a positioning module and/or an audio capture module during the capture of spatial audio.

### BACKGROUND

Positioning modules for determining an absolute or relative position of an object are known, not least for example battery powered radio based positioning devices such as a High Accuracy Indoor Positioning tag (HAIP-tag). Conventional positioning modules are not always optimal. For example, portable battery powered positioning modules may have sub-optimal operational and power consumption characteristics that may limit their battery/operational lifetime. It is useful to provide a method and apparatus with improved control of operation of a positioning module.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various but not necessarily all examples of the disclosure there is provided a method comprising:
associating one or more positioning modules with one or more audio capture modules; and
controlling one or more operations of the one or more positioning modules and/or the associated one or more audio capture modules in dependence upon:
   one or more pre-determined times, and
   one or more pre-determined positions.

According to various but not necessarily all examples of the disclosure there is provided an apparatus comprising means configured to:
associate one or more positioning modules with one or more audio capture modules; and
control one or more operations of the one or more positioning modules and/or the associated one or more audio capture modules in dependence upon:
   one or more pre-determined times, and
   one or more pre-determined positions.

According to various but not necessarily all examples of the disclosure there is provided an apparatus comprising:
at least one processor; and
at least one memory including computer program code;
the at least one memory and the computer program code configured to, with the at least one processor, cause the apparatus at least to perform:
   associating one or more positioning modules with one or more audio capture modules; and
   controlling one or more operations of the one or more positioning modules and/or the associated one or more audio capture modules in dependence upon:
      one or more pre-determined times, and
      one or more pre-determined positions.

According to various but not necessarily all examples of the disclosure there is provided a computer program that, when performed by at least one processor, causes:
associating one or more positioning modules with one or more audio capture modules; and
controlling one or more operations of the one or more positioning modules and/or the associated one or more audio capture modules in dependence upon:
   one or more pre-determined times, and
   one or more pre-determined positions.

According to various but not necessarily all examples of the disclosure there is provided a non-transitory computer readable medium encoded with instructions that, when performed by at least one processor, causes at least the following to be performed:
associating one or more positioning modules with one or more audio capture modules; and
controlling one or more operations of the one or more positioning modules and/or the associated one or more audio capture modules in dependence upon:
   one or more pre-determined times, and
   one or more pre-determined positions.

According to various but not necessarily all examples of the disclosure there is provided a chipset, module, or device comprising processing circuitry configured to:
associate one or more positioning modules with one or more audio capture modules; and
control one or more operations of the one or more positioning modules and/or the associated one or more audio capture modules in dependence upon:
   one or more pre-determined times, and
   one or more pre-determined positions.

According to various, but not necessarily all examples of the disclosure there is provided a system comprising:
the apparatus as mentioned above;
the one or more positioning modules; and
the associated one or more audio capture modules.

According to various, but not necessarily all, embodiments of the invention there are provided examples as claimed in the appended claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
Figure 1 schematically illustrates a method;
Figure 2 schematically illustrates a further method;
Figure 3 schematically illustrates a yet further method;
Figure 4 schematically illustrates an apparatus;
Figure 5 schematically illustrates a system;
Figure 6 schematically illustrates a further system;
Figure 7 illustrates a system in use during spatial audio capture of a video shoot;
Figure 8 illustrates an example HAIP-tag activation program; and
Figure 9 illustrates a system in use during spatial audio capture of a video shoot

The Figures are not necessarily to scale. Certain features and views of the figures may be shown schematically or exaggerated in scale in the interest of clarity and conciseness. For example, the dimensions of some elements in the figures may be exaggerated relative to other elements to aid explication.

### DETAILED DESCRIPTION

Examples of the present disclosure may take the form of a method, an apparatus or a computer program. Accordingly, examples may be implemented in hardware, software or a combination of hardware and software. Examples of the method, apparatus, system and computer program according to the present disclosure will now be described with reference to the Figures.

Similar reference numerals are used in the Figures to designate similar features, where possible. For clarity, all reference numerals are not necessarily displayed in all figures.

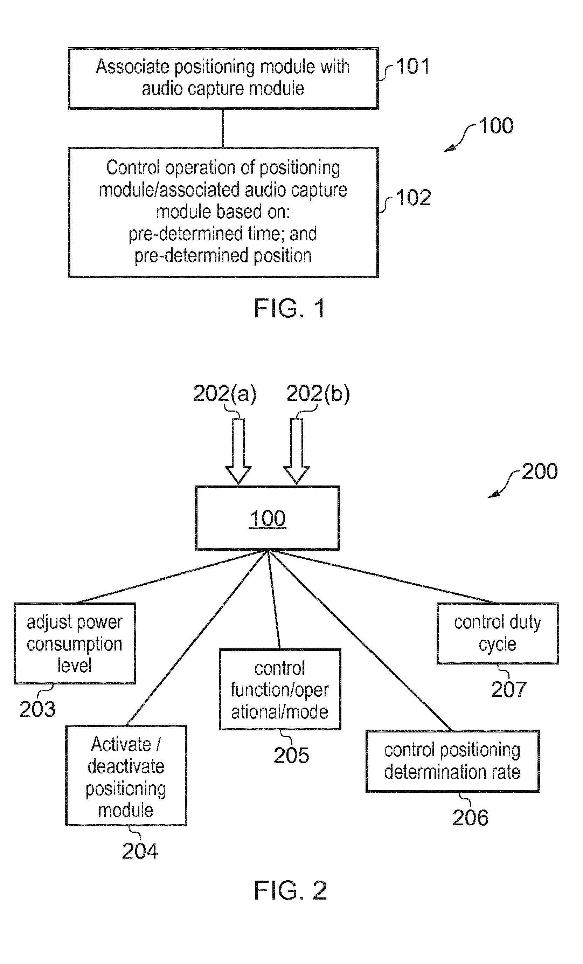

Figure 1 schematically illustrates a method 100 comprising block 101 in which one or more positioning modules 501 are associated with one or more audio capture modules 502. In block 102, one or more operations of the one or more positioning modules 501 and/or one or more operations of the associated one or more audio capture modules 502 are controlled in dependence upon:
one or more predetermined times 202(a); and
one or more predetermined positions 202(b).

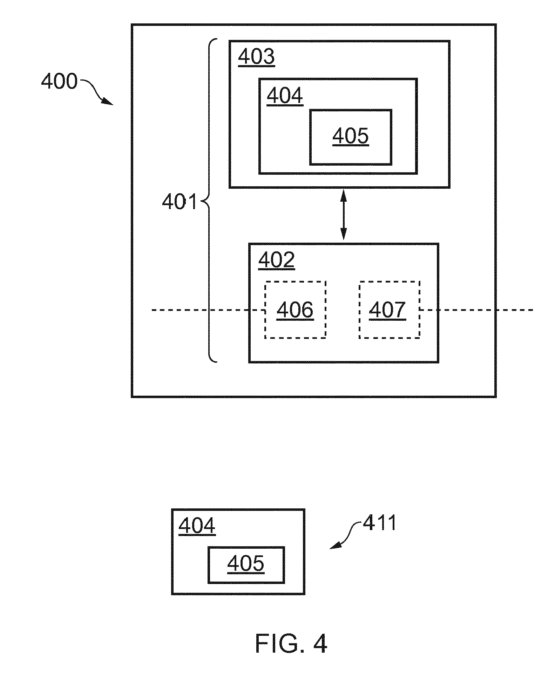

The component blocks of Figure 1 are functional and the functions described may or may not be performed by a single physical entity (such as apparatus 400 with reference to Figure 4).

As used herein, a "positioning module" may be a module or means configured to enable the determination of a position, for example an absolute position or a position relative to an origin, particular location or fiducial point. In some examples the positioning module may be a transmitter, beacon or radio transmitter of a positioning system, such as an indoor positioning system. The positioning system may, for example, be Nokia's High Accuracy Indoor Positioning (HAIP) system, and the positioning module may be a HAIP tag that transmits signals to one or more receivers/locators of the HAIP system, based on which a triangulation and location of the HAIP tag may be determined.

For the purposes of illustration and not limitation, in some examples the positioning module may be a HAIP tag of a HAIP system. An apparatus/controller may wirelessly transmit a control signal to the HAIP tag so as to control it and alter its power consumption level, for example by altering the rate at which the HAIP tag transmits positioning signals to the controller and/or other receivers/locators of the HAIP system that are used to determine the position of the HAIP tag. Examples of the present disclosure enable the control of the HAIP tag, e.g. control of its positioning signal transmissions such as the rate/periodicity of such transmissions based on pre-determined times and positions. For example, outside of a particular time window and spatial area, high accuracy/real-time positioning determination may not be required, so the HAIP tag may be controlled to operate in a low power mode, e.g. where it transmits its positioning signals at a low rate/intermittently enabling relatively low accuracy/non-real time positional information to be determined, though still at an acceptable level of service/positional determination. Using such positional signals, a determination may be made as to whether or not the positioning module is located at a predetermined position/area at a predetermined time/time interval. When it is determined that a current time and current position of the HAIP tag correspond to a pre-determined time and position, this may trigger an apparatus/control module to send a control signal to the HAIP tag to cause the HAIP tag to increase the rate of transmission of positioning signals, e.g. so as to transmit them continuously so as to enable high accuracy/real time positional information to be determined. In such a manner, certain examples of the disclosure may enable high accuracy/real time positioning at desired pre-determined times, and at other times and locations the HAIP tag may operate at a lower power mode thereby increasing the power efficiency of the HAIP tag and its operational/battery lifetime.

In some further examples of the disclosure, an audio capture module, such as a wireless radio microphone, may be associated with the positioning module and the audio capture module may also be controlled based on pre-determined times and locations. Such control may enable power conservation of the audio capture module and extend its operational/battery lifetime.

Such examples may be used in a system for capturing spatial audio, wherein the determined positional information of a HAIP tag may be used in conjunction with captured audio from a wireless radio microphone that is associated with the HAIP tag, for example in a video/film/TV shoot where an actor/speaker may carry the HAIP tag and wireless radio microphone on his/her person, and the times/positions where spatial audio capture are required are pre-determined and pre-defined according to a shooting script/screenplay.

Without limiting the scope of the claims, an advantage/technical effect of certain examples of the present disclosure may be to provide improved control of one or more operations of a positioning module and/or audio capture module. This may enable increased efficiency of operation and improve power consumption characteristics thereby extending battery/operational life.

Figure 2 schematically illustrates a flow chart of a method 200 according to an example of the present disclosure.

With reference to arrow 202(a), one or more pre-determined times are received. The pre-determined times may be user defined times, time cues or time intervals. With reference to arrow 202(b), one or more pre-determined positions are received. The pre-determined positions may be user defined locations, areas or spatial cues.

Such predetermined times and positions are used in method block 100 (which comprises the method blocks 101 and 102 as discussed above with reference to Figure 1) to control the operations of one or more positioning modules. Blocks 203 - 207 show various operations of the one or more positioning modules and/or associated audio capture modules that may be controlled. In block 203, a power consumption level of one or more of the positioning modules/associated audio capture modules may be adjusted. In block 204, one or more of the positioning modules/associated audio capture modules may be activated or deactivated, i.e. the module itself may be powered up/down or a particular component of the module may be powered up/down. For example, where the module further includes a transmitter (e.g. to transmit positional signals that are used in the determination of positioning information, or to transmit captured audio) the transmitter may be controlled, e.g. so as to selectively power it up or power it down. Furthermore, such activation and deactivation may comprise periodic activation, i.e. intermittently switching between periods of activation and deactivation. In block 205, one or more functions/operations or modes of the one or more modules may be controlled. For example, controlling a transmission mode/rate of the module. For instance switching a positioning module between a low power/low positioning accuracy operational mode and high power/high accuracy positioning operational mode. In block 206, a position determination rate, such as a positioning signal transmission rate, of the one or more positioning modules may be controlled, for example, adjusted from a rate of several times per minute to a rate of several times per second. In block 207, a duty cycle of one or more components of the positioning/audio capture modules may be controlled such that the percentage of time a particular component of the module is active, e.g. a receiver, transmitter, processor or other element or sub-module of the module is active.

In various examples, a determination may be made as to a current time which is compared to the predetermined time so as to ascertain whether or not the current time matches to the predetermined time. Likewise, a determination may be made as to a current position of the positioning module, for example by one or more receivers of a positioning system receiving positioning signals transmitted from the positioning module and processing the same so as to determine the position of the positioning module. Alternatively, in other examples, the positioning module may itself determine its own location and transmit the same to a controller. Once the current position of the positioning module has been determined, a determination may then be made as to whether or not the current position corresponds to the predetermined position. One or more operations of the positioning module and/or associated audio capture module may then be controlled in dependence upon a determination that the current time and the present position correspond to the predetermined time and predetermined position.

The one or more predetermined times and the one or more predetermined positions may be received in the form of a data structure comprising predetermined temporal and spatial co-ordinates, and/or a temporal range (time interval) and spatial range (i.e. area), which are used to dictate where and when the operation of the positioning module and/or associated audio capture module is/are to be controlled.

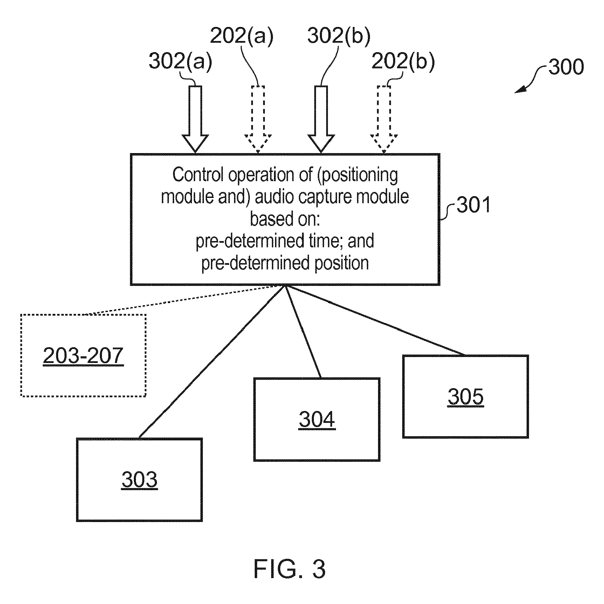

Figure 3 shows a further method 300 in which (in addition to or instead of controlling the operation of one or more positioning modules) an operation of one or more audio capture modules 502 may be controlled in dependence upon one or more predetermined times 302(a) and one or more predetermined positions 302(b). In some examples, the predetermined times and positions 302(a), 302(b) used to control an operation of the audio capture module 502 may correspond to the predetermined times and positions 202(a), 202(b) used to control the positioning module 501. Alternatively, they may differ, i.e. so time cues and positional cues for triggering the control of the positioning module 501 may be separate and distinct from the time cues and positional cues for triggering control of the audio capture module 502.

In the method 300 of Figure 3, the predetermined times and positions 302(a), 302(b) for the audio capture module 502 (and the predetermined times and positions 202(a), 202(b) for the positioning module 501) are received and used to control the operations of the audio capture module 502 (and the positioning module 501) in block 301.

The operations that may be controlled by the positioning module 501 are shown with reference to blocks 203-207 as described above with respect to Figure 2. The operations of the one or more audio capture modules 502 that may be controlled comprise one or more of:
adjusting a power consumption level of the one or more audio capture modules, as per block 303;
activating/deactivating one or more audio capture modules, as per block 304; and
controlling one or more functions/operations/modes of the one or more audio capture modules as per block 305.

In some examples, the whole audio capture module 502 may be powered up/powered down or alternatively a component or subelement of the module may be powered up or powered down. For example, where the audio capture module further includes a transmitter to transmit captured audio to a remote receiver/controller, the transmitter may be controlled, e.g. so as to selectively power it up or power it down. Certain examples may reduce power consumption of audio capture modules 502. Where such audio capture modules are powered by on-board sources of power, such as a battery, this may extend the operational lifetime of the audio capture module before its power runs out. The dependence of the controlled operation of the audio capture modules on one or more predetermined positions 302(b) may correspond to determining whether or not a current position of the audio capture module is associated with the predetermined position. The audio capture module 502 may be associated with the positioning module 501, such that the determined position of the positioning module may be equated to or may be used to determine the position of the audio capture module. For example, the audio capture module and positioning module may be proximately located with one another, such as affixed to/carried by the same person. In some examples, the audio capture module 502 and positioning module 501 may be provided as a single device/unit and contained in the same housing thereof.

The one or more predetermined times 302(a) and one or more predetermined positions 302(b) may take the form of a data structure comprising predetermined temporal and spatial co-ordinates defining where and when the operation of the audio capture module is to be altered. A single data structure may be provided that provides both temporal and spatial information for controlling each positioning module and associated audio capture module. Alternatively, a separate data structure may be provided for each positioning module and audio capture module.

In some examples, the control of the operations is caused by the transmission of a control/command signal to the positioning module and/or audio capture module to cause the positioning module and/or audio capture module to effect the controlled/commanded operation.

The method blocks/flowcharts of Figures 2 and 3 represent a possible scenario among others. The order of the blocks shown is not absolutely required, so in principle, the various blocks can be performed out of order. Not all the blocks are essential. In certain examples one or more blocks may be performed in a different order or overlapping in time, in series or in parallel. One or more blocks may be omitted or added or changed in some combination of ways.

The above examples of the present disclosure have been described using schematic block diagrams and flowchart illustrations. It will be understood that each block, and combinations of blocks, can be implemented by various means, such as hardware, firmware, and/or software including one or more computer program instructions. For example, one or more of the procedures described above may be embodied by computer program instructions of a computer program. In this regard, the computer program instructions which embody the procedures described above may be stored by a memory storage device and performed by a processor. These computer program instructions may be provided to one or more processor(s), processing circuitry or controller(s) such that the instructions which execute on the same create means for causing implementing of the functions specified in the block or blocks. The computer program instructions may be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Figure 4 schematically illustrates a block diagram of an apparatus 400. The apparatus may be configured to perform the above described methods. Figure 4 focuses on the functional components necessary for describing the operation of the apparatus.

The apparatus 400 comprises a controller 401. The controller 401 is configured to receive input predetermined times and positions 202(a), 202(b) and is configured to provide output commands to a positioning module 501 (and also, in certain examples, an audio capture module 502).

Implementation of the controller 401 can be in hardware alone (for example processing circuitry comprising one or more processors and memory circuitry comprising one or more memory elements), have certain aspects in software including firmware alone or can be a combination of hardware and software (including firmware).

The controller may be implemented using instructions that enable hardware functionality, for example, by using executable computer program instructions in a general-purpose or special-purpose processor that may be stored on a computer readable storage medium (disk, memory etc.) or carried by a signal carrier to be performed by such a processor.

In the illustrated example, the apparatus 400 comprises the controller 401 which is provided by a processor 402 and memory 403. Although a single processor and a single memory are illustrated, in other implementations there may be multiple processors and/or there may be multiple memories, some or all of which may be integrated/removable and/or may provide permanent/semi-permanent/ dynamic/cached storage.

The memory 403 stores a computer program 404 comprising computer program instructions 405 that control the operation of the apparatus 400 when loaded into the processor 402. The computer program instructions 405 provide the logic and routines that enable the apparatus 400 to perform the methods presently described.

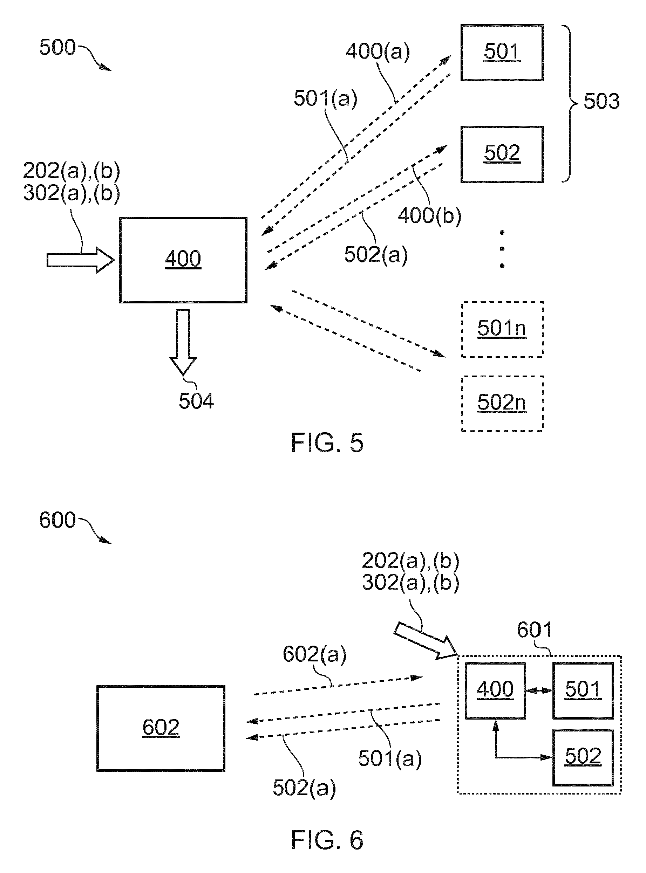

The memory 403 and the computer program instructions 405 are configured to, with the at least one processor 402, cause the apparatus 400 at least to perform the methods described, not least for example with respect to figures 1, 2 and 3 (as well as enable the functionality discussed below with respect to Figures 5 to 9).

The processor 402 is configured to read from and write to the memory 403. The processor 402 may also comprise an input interface 406 via which data (such as the predetermined times and positions 202(a), 202(b), 302(a), 302(b) for the positioning and audio capture modules 501, 502) is input to the processor 402, and an output interface 407 via which data and/or commands are output by the processor 402 (such as to control the positioning and audio capture modules 501, 502).

The computer program 404 may arrive at the apparatus 400 via any suitable delivery mechanism 411. The delivery mechanism 411 may be, for example, a non-transitory computer-readable storage medium, a computer program product, a memory device, a record medium such as a compact disc read-only memory, or digital versatile disc, or an article of manufacture that tangibly embodies the computer program 404. In some examples the delivery mechanism 411 may be a signal configured to reliably transfer the computer program 404 to the apparatus 400. The apparatus 400 may receive, propagate or transmit the computer program 404 as a computer data signal.

The apparatus 400 may, for example, be a server device, a client device, a hand-portable electronic device etc. or a module or chipset for use in any of the foregoing.

The apparatus 400 may comprise a transmitting device (not shown) and a receiving device (not shown) for communicating with other devices/remote modules (not least with positioning and audio capture modules 501, 502) via a wireless communications channel.

The apparatus 400 may also be configured to receive positioning signals from the positing module 501 and/or other receiver/locator devices of a positioning system to determine a position of the positioning module 501. Alternatively, such position determination may be carried out by a separate controller of the positing system and a determined position of the positioning module 501 may be sent to the apparatus. The apparatus 400 may also be configured to receive signals from the audio capture module 502 related to audio captured by the module. The apparatus 400 may be configured to use the determined position and received captured audio to spatially mix the captured audio to generate spatial audio.

Although examples of the apparatus have been described above in terms of comprising various components, it should be understood that the components may be embodied as or otherwise controlled by a corresponding controller or circuitry such as one or more processing elements or processors of the apparatus. In this regard, each of the components described above may be one or more of any device, means or circuitry embodied in hardware, software or a combination of hardware and software that is configured to perform the corresponding functions of the respective components as described above.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analogue and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

Figure 5 shows a system 500 comprising the apparatus 400 and a plurality of positioning modules 501-501 n, and a plurality of audio capturing modules 502-502n. The apparatus 400 is configured such that, responsive to one or more predetermined times and positions 202(a), 202(b), 302(a), 302(b), it may send a control signal 400(a) to a remote positioning module 501 for controlling one or more of its operations as previously discussed. The positioning module may be controlled so as to be activated so as to send positioning signals 501 (a) back to the apparatus 400 (and/or other receiving/locating devices of a positioning system - not shown) so as to enable determination of the position of the positioning module and generation of position information of the same.

The apparatus 400 may use such position information in combination with the predetermined times and positions to send further control signals 400(a) to the positioning module, for example so as to increase its positioning signal transmission rate and/or send control signals 400(b) to the audio capturing module 502 so as to control its operations as discussed above. The audio capturing module 502 may be controlled so as to be activated and commence capture of audio which may be transmitted back to the apparatus 400 (and/or other receiver device - not shown) via audio signals 502(a).

Each positioning module may be associated with a particular audio capturing module so as to form a positioning and audio capture module pair 503. The apparatus 400 may control a plurality of positioning and audio capturing modules. In certain embodiments, each positioning module is associated with a particular audio capturing module so as to form an associated pair 503. Such an associated pair may, for example, correspond to a positioning module 501 and an audio capture module 502 both being attached to a same object/person such that the positioning information derived from the positioning module 501 is equated with a position of the associated audio capture module 502. Such a pair 503 may be controlled by the same predetermined times and positions. This may enable the audio capture module 502 to remain in a low power state whilst only a single positioning module 501 is in a powered active state to provide positioning information (used to determine when, i.e. when a determined position corresponds to a pre-determined position and time, to active the associated audio capture module), thus conserving power and extending the battery/operational lifetime of the audio capture module 502.

In other examples, a positioning module 501 may be associated with a plurality of audio capture modules 502-502n. The operation of the plurality of audio capture modules may be dependent upon the positional information derived from the single associated positioning module 501. In such examples, a position of one of the existing modules is determined and the operation of a plurality of audio capture modules is controlled in dependence upon the one or more predetermined times, the one or more predetermined positions and the determined position from the associated one positioning module 501. This may enable the plurality of audio capture modules 502-502n to all remain in a low power state whilst only a single positioning module is in a powered active state to provide positioning information (used to determine when, i.e. when a determined position corresponds to a pre-determined position and time, to activate the associated audio capture modules), thus conserving power and extending the battery/operational lifetimes of the plurality of audio capture modules 502-502n.

In yet other examples, one positioning module may be associated with a plurality of other positioning modules such that a position of one of the positioning modules is determined and an operation of a plurality of other positioning modules is controlled in dependence upon the one or more predetermined times and positions and the determined position of the one associated positioning module. In such a manner a plurality of positioning modules may be grouped together and controlled based on a determined position from a single positioning module. This may enable the plurality of positioning modules to remain in a low power state whilst only a single positioning module is in a powered active state to provide positioning information (used to determine when, i.e. when a determined position corresponds to a pre-determined position and time, to activate the associated plurality of positioning modules), thus conserving power and extending the battery/operational lifetimes of the plurality of positioning modules.

In some examples, the one or more positioning modules may be associated with one or more sensors (not shown). For example, sensors other than audio sensors or audio capture devices that may be responsive to physical parameters other than sound. The apparatus may be configured to send control signals to control the operation of such sensors in dependence upon the one or more pre-determined times and positions.

The positioning modules 501-501 n may correspond to or be comprised in one or more of: a wireless device, a user portable device, a wearable device, a battery powered device, a device for indoor positioning, a radio based positioning device, a radio transmitter/beacon of an indoor positioning system, and a high accuracy indoor positioning (HAIP) tag. The positioning module may comprise its own controller, e.g. processor and memory that control its operation.

The audio capture modules 502-502n may correspond to or be comprised in one or more of: a wireless device, a user portable device, a wearable device, a battery powered device, a close-up microphone, a lavalier microphone, and a lapel microphone. The audio capture module may comprise its own controller, e.g. processor and memory that control its operation.

As used here 'module' refers to a unit or apparatus that excludes certain parts/components that would be added by an end manufacturer or a user. For example, as previously discussed, the positioning module may be a part of a positioning system.

The received captured audio 502(a) and position information derived from the position signals 501 (a) may be used by an audio mixing algorithm so as to generate spatial audio 504 based on the captured audio and the determined location.

Where there are a plurality of audio sources whose audio is to be captured, each audio source may be provided with its own positioning module and audio capture module pair 503. Each audio capture module 502 can be programmed to activate on a "temporal and spatial script" defined by the pre-determined one or more time and positions so that only one audio capture module may be activated at one time (and location). This may avoid the 'accidental' capture of audio from an audio source by two or more audio capture modules which could adversely affect the generation of spatial audio as the same audio may be associated with two or more positions, i.e. the position of each of the audio captured modules that picked up/captured the audio.

In Figure 5, the apparatus 400 is separate, distinct and remote from the positioning module and audio capture module requiring the transmission of signals therebetween. In the system 600 shown in Figure 6, the apparatus 400 which controls the operations of the positioning module 501 and audio capture module 502 are provided in the same device 601. The controller 401 may send control signals to the positioning module 501 and likewise send control signals to the audio capture module 502. A further controller 602, remote of the controller 401 may receive positioning signals from the positioning device and/or may also receive signals from one or more receivers/locators of the positioning system (not shown) and use the same to determine the position of the device 601. The determined position/positional information 602(a) may be sent to the device 601. Such positional information related to the current position of the device 601 may be used to determine if the current position corresponds to a predetermined position.

Captured audio information 602(b) may be transmitted from the apparatus 601 to the controller 602 which may process the same, using the determined positioned the device, to generate spatial audio.

The apparatus 601 comprising the controller 401, positioning module 501 and audio capture module 502 may be housed in a single device further including a transmitter for transmitting positioning signals (used by the positioning system infrastructure and an arrangement of receivers/locators of the same to determine the position of the device) and also transmit captured audio information 502(a). Alternatively, the controller 401 may, in some examples, be combined just with the positioning module 501 in a single device, separate from a device housing the audio capture module 502.

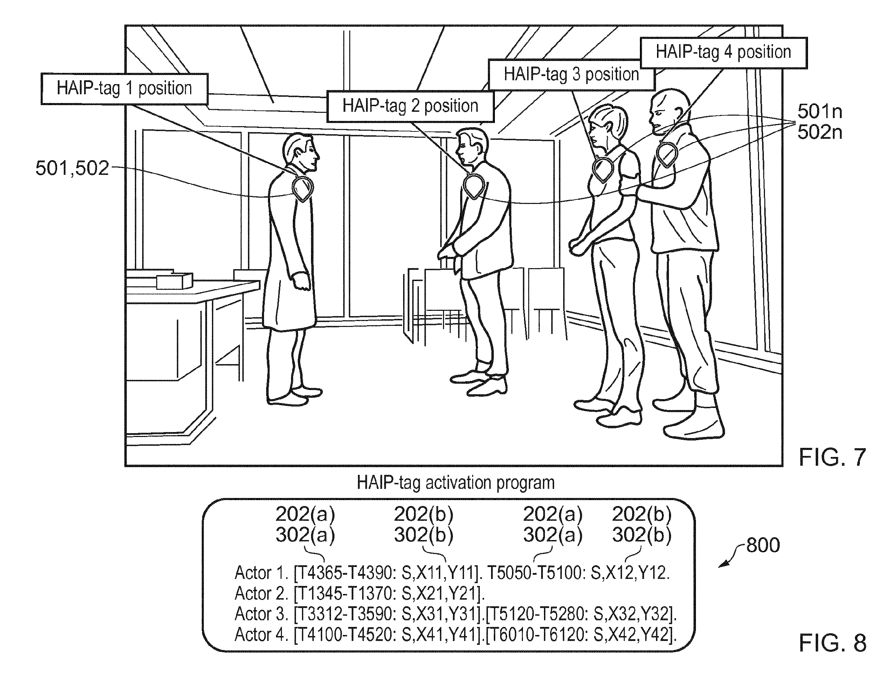

Figure 7 illustrates an exemplary use of the examples in the present disclosure, namely use during a capture or production phase of creating spatial audio content for example as part of a scripted video shoot (live or non-live) for generating virtual reality content.

In this video shooting scenario, the audio capture modules 502-502n are wireless close-up microphones attached to each actor (having a pre-determined speaking role). The positioning modules 501-501 n are HAIP tags of a HAIP system, whereby positioning signals transmitted by the HAIP tags are detected by an arrangement of receivers/locators and such received signals are used to determine the position of the HAIP tag.

A close-up microphone and HAIP tag may be provided to each actor or object for which it is desired to capture spatial audio (i.e. for example actor's speech) and to generate spatial audio therefrom. The close-up microphone may itself be equipped with a HAIP tag, i.e. such that they are contained together and embedded in the same device. Both the close-up microphone and the HAIP tag are battery powered.

Audio captured by the wireless close-up microphones, i.e. the actor's speech, is transmitted to a controller. The controller may also receive or at least partially determine positioning information from the position of the HAIP tag based on positioning signals transmitted by the HAIP tag (and signals received from other receivers/locators of the HAIP system infrastructure).

The controller may automatically mix spatially the captured audio content based on the microphone's position as determined via the HAIP tag.

During a production or pre-production phase of a video shoot, a set of one or more predetermined times and one or more predetermined positions, may be set by video script/director or other person involved in the preparation of the video shoot, that effectively define the various times and positions where and when each actor is to speak and move to. This is used to control the close-up microphone and HAIP tag such that they are activated and suitably operational so as to enable capturing of the audio and determination and monitoring a position of the associated actor such that spatial audio can be generated from the captured audio and positional information.

Such predetermined times and positions may be used to create a HAIP-tag activation program, "HTAP", defining a temporal sequence of binary speaking states (i.e. speaking/non speaking) and location co-ordinates for the same. Such a sequence may be provided for each HAIP-tag/microphone pair for each actor with a speaking role. The HTAP represents when to activate and deactivate the close-up microphone and the associated HAIP. The times and positions of the HTAP may be based on timing and positional directions of a video script and/or shooting schedule such that the HAIP-tag and microphone can be suitably programmed for activation when an actor speaks (e.g. just in advance of when an actor is due to speak for the pre-determined duration of the speech).

Since time only information may not be sufficiently accurate in video shooting situations, the inventors of the present invention have based the activation of the HAIP tag and microphone based not only on time information but also location information, i.e. a location of an actor (such predetermined times and positions may be defined from a video script of the video shoot).

The following scenario considers the production or capturing phase of shooting a video, such as when shooting a movie, an interview, a theatre act, a presentation, etc. both live and non-live situations are considered.

The capture set-up may be as follows. A virtual reality camera such as the Nokia OZO(TM) camera may be used to capture visual data and optionally also audio via multiple microphones embedded in the camera itself. However, for particular audio sources which are to be captured, such as actors, presenters, etc. a close-up microphone such as a lavalier microphone and a HAIP-tag are provided for the actor/presenter to wear. The HAIP-tag continuously provides the location of the close-up microphone (and thus the location of the audio source). The audio source location may be used for automatically mixing the captured close-up audio spatially.

Figure 7 illustrates a spatial audio capture set-up of a video shoot with four actors, each provided with their own close-up microphone and HAIP-tag.

Since each close-up microphone and HAIP-tag is battery powered, they may work continuously only for a limited time which thus poses limitations to the video shooting logistics. Examples of the present disclosure seek to increase the power consumption efficiency of the close-up microphone and HAIP-tag for the duration of a video shoot thereby extending their lifetime.

In the scenario of shooting a scene of a movie, practically everything that happens in a movie has been previously planned carefully and is described in details in a movie script. The movie script may set out which actor speaks at any one time and also wear the actor will be standing. Based on a movie script, a HAIP-tag activation program (HTAP) may be created which contains a temporal sequence of binary speaking states and location co-ordinates for each actor for the scene to be shot. Such a sequence provides a schedule as to when to activate or deactivate the close-up microphone and HAIP-tag for the associated actor wearing the close-up microphone and HAIP-tag.

The HTAP provides the spatial and temporal information that is used to control the close-up microphone and associated HAIP-tag, i.e. to activate the same, when a particular actor reaches a particular location within a certain temporal window.

Figure 8 shows an example of a HAIP-tag activation program, HTAP, comprising the one or more predetermined times 202(a), 302(a) and one or more predetermined positions 202(b), 302(b) for controlling the operation of 4 HAIP-tag and close-up microphone pairs, i.e. one pair for each actor. These time stamped and position stamped speaking slots define a temporal and spatial schedule and sequence of speaking slots for each actor. For example, "Actor 4. [T4100-T4520: S, X41,Y41]" means that actor 4 speaks from time (in seconds) 4100 to time 4520 at location (X41, Y41). Such temporal and spatial information is used to program a schedule of activation/deactivation of the HAIP-tag and close-up microphone when it is determined that the current actor is within the predetermined time window and located at the predetermined location.

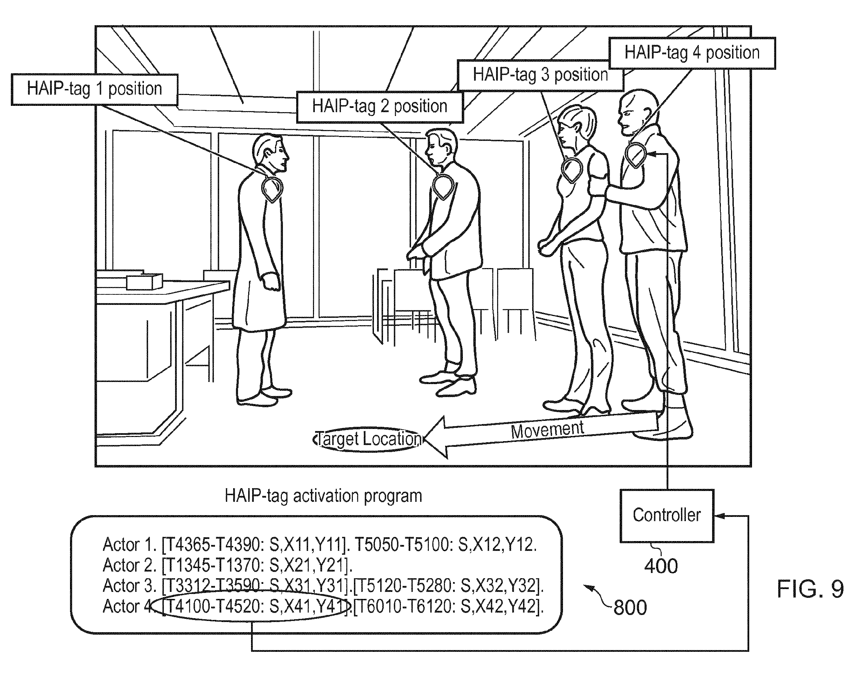

With reference to Figure 9, during the shooting of the video, the HTAP is read by an apparatus 400. The apparatus associates the HTAP time stamps to a live/current time line. The HTAP may describe that soon, i.e. within a certain time window, actor 1 will move to a certain location and will start speaking. The apparatus may start activating actor 1's HAIP-tag initially only periodically, in order to determine the actor's location and when the actor reaches the target location described by the HTAP. Once the actor has reached the target location, the apparatus may activate the associated HAIP-tag fully, i.e. so as to work continuously rather than just periodically to provide high accuracy positioning information. Also, the apparatus may activate the close-up microphone so as to commence capture of audio. When the HTAP describes that the actor has stopped speaking, the apparatus may deactivate both the HAIP-tag and the close-up microphone.

The controlled activation and deactivation of a close-up microphone of a particular actor may not only extend the battery lifetime of said microphone but also may prevent/reduce the microphone capturing non-desired audio, i.e. the capturing of audio that is not of the particular actor's speech, such as voices of other nearby actors who speak at times when a particular actor is not speaking, i.e. silent moments for that particular actor. This would otherwise be problematic as the HAIP-tag location may sometimes be noisy and not precise and the dual capture of speech by two close-up microphones may cause the rendering of the same voice in two different locations, one from a current speaker's own close-up microphone and another from a close-up microphone of a nearby actor, which would ruin the spatial audio listening experience.

Since typically only one actor speaks at any given time, the HTAP can be set such that only a single microphone is active at a particular time (and/or at a particular location). Where a plurality of close-up microphones are used in a video shoot, the close-up microphones may be controlled such that only one is activated at a given time (and/or location) so as to avoid such multiple capture of a single actor's voice by one or more close-up microphones.

In other examples, HAIP-tags can be grouped together. For example, in the case where there are a group of dancers who also sing and their performance may be known to be in sync and thus one need only monitor one of the dancer's HAIP-tags. The input from one of the tags can then be used to control a series of associated tags (of the other dancers) and audio capture from associated microphones, i.e. a single HAIP tag can, in effect, be used as a master to other tags (and microphones) of the group of dancers.

Examples of the present disclosure provide both a method and corresponding apparatus comprising various modules, means or circuitry that provide the functionality for performing the actions of the method. The modules, means or circuitry may be implemented as hardware, or may be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Features described in the preceding description may be used in combinations other than the combinations explicitly described.

Although functions have been described with reference to certain features, those functions may be performable by other features whether described or not. Although features have been described with reference to certain examples, those features may also be present in other examples whether described or not. Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components).

As used herein, the "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some or all other examples. Thus 'example', 'for example' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means...] are to be interpreted as "at least one" [feature, element, component, means...] unless explicitly stated otherwise.

In the above description, the apparatus described may alternatively or in addition comprise an apparatus which in some other embodiments comprises a distributed system of apparatus, for example, a client/server apparatus system. In examples of embodiments where an apparatus provided forms (or a method is implemented as) a distributed system, each apparatus forming a component and/or part of the system provides (or implements) one or more features which collectively implement an example of the present disclosure. In some examples of embodiments, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

## Claims

1. A method comprising:
associating one or more positioning modules with one or more audio capture modules; and
controlling one or more operations of the one or more positioning modules and/or the associated one or more audio capture modules in dependence upon:
one or more pre-determined times, and
one or more pre-determined positions.

2. The method of claim 1, further comprising:
receiving one or more user defined time cues defining the one or more pre-determined times; and
receiving one or more user defined position cues defining the one or more pre-determined positions.

3. The method of any one or more of the previous claims, wherein controlling the operation of the one or more positioning modules comprises controlling one or more of:
adjusting a power consumption level of the one of more positioning modules,
activating the one or more positioning modules,
deactivating the one or more positioning modules,
controlling one or more functions/operations/modes of the one or more positioning modules,
controlling a positioning determination rate of the one or more positioning modules, and
controlling a duty cycle of one or more components of the one or more positioning modules.

4. The method of any one or more of the previous claims, wherein the one or more positioning modules is comprised in one or more of:
a wireless device, a user portable device, a wearable device, a battery powered device, a device for indoor positioning, a radio beacon of a positioning system, and a high accuracy indoor positioning tag.

5. The method of any one or more of the previous claims, further comprising:
determining one or more current positions of the one or more positioning modules;
determining a current time; and
controlling an operation of the one or more positioning modules and/or associated one or more audio capture modules in dependence upon:
the one or more pre-determined times,
the one or more pre-determined positions,
the one or more determined current positions, and
the determined current time.

6. The method of any one or more of the previous claims, wherein controlling the one or more operations of the associated one or more audio capture modules comprises controlling one or more of:
adjusting a power consumption level of the associated one or more audio capture modules,
activating/deactivating the associated one or more audio capture modules, and
controlling one or more functions/operations/modes of the associated one or more audio capture modules.

7. The method of any one or more of the previous claims, wherein the associated one or more audio capture modules is comprised in one or more of:
a wireless device, a user portable device, a wearable device, a battery powered device, a close up microphone, a radio microphone, a lavalier microphone, and a lapel microphone.

8. The method of any one or more of the previous claims, wherein the method is used in a spatial audio capturing system, the method further comprising:
capturing audio using the associated one or more audio capture modules,
determining a location using the positioning module;
generating spatial audio based on the captured audio and the determined location.

9. The method of any one or more of the previous claims, further comprising:
associating the one or more positioning modules with one or more sensors; and
controlling the operation of the one of the one or more sensors in dependence upon the one or more pre-determined times and positions.

10. The method of any one or more of the previous claims 1 to 8, further comprising:
associating one of the one or more positioning modules with a plurality of audio capture modules and
controlling the operation of the one of the one or more positioning modules and its respectively associated plurality of audio capture modules in dependence upon the one or more pre-determined times and positions.

11. The method of any one or more of the previous claims, further comprising:
determining a position of one of the one or more positioning modules; and
controlling an operation of a plurality of positioning modules in dependence upon:
the one or more pre-determined times,
the one or more pre-determined positions, and
the determined position.

12. An apparatus comprising means configured to perform the method of any one or more of the previous claims.

13. The apparatus of claim 12, further comprising one of the one or more positioning modules and/or the associated one or more audio capture modules.

14. A system comprising:
the apparatus of claim 12 or 13,
the one or more positioning modules; and
the associated one or more audio capture modules.

15. A computer program that, when performed by at least one processor, causes the method as claimed in any one or more of claims 1 to 11.
